# EUROPÄISCHE PATENTANMELDUNG

(11) **EP 3 922 475 A1**
(43) Veröffentlichungstag der Anmeldung: **15.12.2021**
(21) Anmeldenummer: 21020279.2
(22) Anmeldetag: 27.05.2021
(51) Int. Cl.: B42D 25/324, B32B 7/023, G02B 5/20

(54) **VERBUNDKÖRPER, DEKORFOLIE UND HERSTELLUNGSVERFAHREN**

(30) Priorität: 10.06.2020 DE 102020003493
(71) Anmelder: Giesecke+Devrient Currency Technology GmbH, 81677 München (DE)
(72) Erfinder: Szendrei-Temesi, Katalin, 82024 Taufkirchen (DE); Scherer, Maik Rudolf Johann, 82491 Grainau (DE); Lenssen, Daniel, 81829 München (DE); Hunger, Christoph, 83734 Hausham (DE)
(74) Vertreter: Giesecke + Devrient IP

(57) **Zusammenfassung**

Die Erfindung betrifft einen flächigen Verbundkörper mit einem metallischen Erscheinungsbild, der für elektromagnetische Strahlung mit einer Wellenlänge ≥ 0,8 µm im Wesentlichen transparent ist, umfassend eine Mehrzahl eines entlang der Grundfläche des Verbundkörpers orientierten, aus metallischen Mikrostrukturen als Rasterelemente ausgebildeten Rasters, wobei die Raster lateral, d.h. entlang des Querschnitts des Verbundkörpers, auf verschiedenen Höhenstufen versetzt angeordnet sind, wobei jedes einzelne Raster die metallischen Mikrostrukturen in Form von metallischen Flächenabschnitten aufweist.

## Beschreibung

Die Erfindung betrifft einen Verbundkörper und eine denselben umfassende Dekorfolie, die jeweils als Abdeckung z.B. einer Parabolantenne, einer Radarantenne oder ähnlicher Einrichtungen einer Detektionsvorrichtung verwendbar sind. Die Erfindung betrifft des Weiteren ein Verfahren zum Herstellen des Verbundkörpers.

Verbundkörper sowie Dekorfolien, die jeweils als Abdeckung z.B. einer Parabolantenne, einer Radarantenne oder ähnlicher Einrichtungen einer Detektionsvorrichtung eingesetzt werden, müssen in einem bestimmten Wellenlängenbereich oder in mehreren bestimmten Wellenlängenbereichen der elektromagnetischen Strahlung durchlässig sein. Hinsichtlich des Designs einer jeweiligen Detektionsvorrichtung kann ein metallisches Erscheinungsbild erwünscht sein. Eine vollflächige und durchgängige bzw. durchgehende, d.h. ununterbrochene, metallische Schicht blockiert unter Umständen die elektromagnetische Strahlung des fraglichen Wellenlängenbereichs und beeinträchtigt somit die Funktionsweise der Detektionsvorrichtung. Vollflächige und durchgehende metallische Schichten eignen sich in diesem Fall nicht zur Ausstattung der Dekoroberfläche. Ähnliche metallisch aussehende, aber für eine bestimmte elektromagnetische Strahlung durchlässige Flächen können z.B. in Mobiltelefonen, Tabletcomputern oder ähnlichen elektronischen Geräten eine Verwendung als Dekorelement bzw. Dekorfolie finden, ohne dabei den Signalempfang zu stören.

Metallisch aussehende und insbesondere für Radarwellen durchlässige Folien sind im Stand der Technik bekannt, siehe z.B. die EP 3 255 965 A1 und die EP 2 472 295 A1. Die Herstellung kann z.B. so erfolgen, dass eine Folie zunächst vollflächig metallisiert wird und anschließend mittels mechanischer Kräfte gezielt Risse in die Metallschicht eingeführt werden. Eine weitere Herstellungsmethode basiert darauf, dass unterhalb der Metallschicht eine noch nicht ausgehärtete Primerschicht bereitgestellt wird, wobei die Primerschicht im Zuge des Trocknens Risse ausbildet, was sodann zur Ausbildung von Rissen in der Metallschicht führt. Die nach den vorstehend beschriebenen Herstellungsmethoden erhaltenen Dekorfolien besitzen einen metallischglänzenden optischen Eindruck, die Metallbeschichtung ist allerdings nicht durchgängig. Da die Metallbeschichtung unterbrochen ist, entstehen deutlich weniger durch die Strahlung induzierte Ringströme und das Folienprodukt wird damit für die Strahlung durchlässiger.

Ein aus den vorstehend beschriebenen Herstellungsmethoden erwachsender Nachteil ist die geringe Kontrollierbarkeit der Rissbildung und der Homogenität der Risse, zusätzlich kann sich bereits bei kleinen Schwankungen eine Vorzugsrichtung in der Rissbildung ausbilden. Besonders im Falle des Trocknungsverfahrens ist die Kontrollierbarkeit der Rissbreite schwierig und empfindlich im Hinblick auf kleine Parameterschwankungen wie etwa die Trocknertemperatur. Die Schwankungen der Rissbreite und das Vorliegen einer Vorzugsrichtung können einen negativen Einfluss auf das Erscheinungsbild und die Transmission insbesondere für Radarstrahlung ausüben. Die Fläche erscheint dem Betrachter in diesem Fall nicht mehr homogen und hochglänzend-metallisch. Es ist weiterhin denkbar, dass die Risse zu schmal sind, um die metallischen Bereiche voneinander zu trennen, oder es kommt infolge der Vorzugsrichtung zu unerwünschten Effekten, wodurch der Folienverbund wiederum undurchlässiger für die Strahlung wird.

Der vorliegenden Erfindung liegt die Aufgabe zugrunde, einen gegenüber dem Stand der Technik verbesserten Verbundkörper und eine denselben aufweisende Dekorfolie bereitzustellen. Insbesondere soll ein Verbundkörper und eine denselben aufweisende Dekorfolie mit jeweils einheitlicherem metallischen Erscheinungsbild bei gleichzeitig kontrollierbarer Herstellbarkeit bereitgestellt werden.

Die obigen Aufgaben werden durch die im Hauptanspruch und im nebengeordneten Hauptanspruch definierte Merkmalskombination gelöst. Die abhängigen Ansprüche stellen bevorzugte Ausführungsformen dar.

### Zusammenfassung der Erfindung

1. (Erster Aspekt der Erfindung) Flächiger Verbundkörper mit einem metallischen Erscheinungsbild, der für elektromagnetische Strahlung mit einer Wellenlänge ≥ 0,8 µm im Wesentlichen transparent ist, umfassend eine Mehrzahl eines entlang der Grundfläche des Verbundkörpers orientierten, aus metallischen Mikrostrukturen als Rasterelemente ausgebildeten Rasters, wobei die Raster lateral, d.h. entlang des Querschnitts des Verbundkörpers, auf verschiedenen Höhenstufen versetzt angeordnet sind, wobei jedes einzelne Raster die metallischen Mikrostrukturen in Form von metallischen Flächenabschnitten aufweist.
2. (Bevorzugte Ausgestaltung) Flächiger Verbundkörper nach Klausel 1, wobei die metallischen Mikrostrukturen der einzelnen Raster jeweils in Form von parallel zur Grundfläche des Verbundkörpers ausgerichteten metallischen Flächenelementen gebildet sind, oder die metallischen Mikrostrukturen der einzelnen Raster jeweils in Form von zur Grundfläche des Verbundkörpers gekippten metallischen Flächenelementen gebildet sind.
3. (Bevorzugte Ausgestaltung) Flächiger Verbundkörper nach Klausel 1 oder 2, wobei die einzelnen Raster jeweils in Form eines periodischen oder in Form eines aperiodischen Rasters vorliegen.
4. (Bevorzugte Ausgestaltung) Flächiger Verbundkörper nach einer der Klauseln 1 bis 3, wobei die metallischen Mikrostrukturen der einzelnen Raster oberhalb einer Prägelackschicht mit einer darin eingeprägten Reliefstruktur angeordnet sind.
5. (Bevorzugte Ausgestaltung) Flächiger Verbundkörper nach Klausel 4, wobei die in die Prägelackschicht eingeprägte Reliefstruktur Profiltiefen mit lateraler Variation aufweist, um auf diese Weise auf verschiedenen Höhenstufen vorliegende Plateaus für die oberhalb der Plateaus angeordneten metallischen Mikrostrukturen zu bilden, wobei zwei benachbarte Plateaus einen maximalen Höhenunterschied von 500 µm, bevorzugt einen maximalen Höhenunterschied 100 µm und insbesondere bevorzugt einen maximalen Höhenunterschied 50 µm aufweisen.
6. (Bevorzugte Ausgestaltung) Flächiger Verbundkörper nach Klausel 4 oder 5, wobei die in die Prägelackschicht eingeprägte Reliefstruktur Profiltiefen mit lateraler Variation aufweist, um auf diese Weise auf verschiedenen Höhenstufen vorliegende Plateaus für die oberhalb der Plateaus angeordneten metallischen Mikrostrukturen zu bilden, wobei zwei benachbarte Plateaus einen minimalen Höhenunterschied von 50 nm, bevorzugt einen minimalen Höhenunterschied von 500 nm und insbesondere bevorzugt einen minimalen Höhenunterschied von 1 µm aufweisen.
7. (Bevorzugte Ausgestaltung) Flächiger Verbundkörper nach einer der Klauseln 1 bis 6, wobei die metallischen Flächenabschnitte in Form von Vielecken gebildet sind, vorzugsweise in Form von Dreiecken, Vierecken, insbesondere quadratischen Vierecken, oder Sechsecken oder in Form eines Gemisches mindestens zweier der vorstehend genannten Vielecke.
8. (Bevorzugte Ausgestaltung) Flächiger Verbundkörper nach einer der Klauseln 1 bis 7, wobei die metallischen Flächenabschnitte auf n verschiedenen Höhenstufen ausgebildet sind, d.h. die Mehrzahl Raster den Wert n annimmt, wobei der Wert n eine ganze Zahl ≥ 3, vorzugsweise die ganze Zahl 3 oder 4, annimmt.
9. (Bevorzugte Ausgestaltung) Flächiger Verbundkörper nach einer der Klauseln 1 bis 8, wobei die metallischen Flächenabschnitte auf vier verschiedenen Höhenstufen ausgebildet sind und die metallischen Flächenabschnitten vorzugsweise in Form von Vierecken, insbesondere bevorzugt in Form von quadratischen Vierecken, gebildet sind.
10. (Bevorzugte Ausgestaltung) Flächiger Verbundkörper nach einer der Klauseln 1 bis 8, wobei die metallischen Flächenabschnitte auf drei verschiedenen Höhenstufen ausgebildet sind und die metallischen Flächenabschnitte vorzugsweise in Form von Dreiecken oder Sechsecken gebildet sind.
11. (Bevorzugte Ausgestaltung) Flächiger Verbundkörper nach einer der Klauseln 1 bis 10, wobei die metallischen Flächenabschnitte von Ende bis Ende eine maximale Länge von 500 µm, vorzugsweise eine maximale Länge von 100 µm und insbesondere bevorzugt eine maximale Länge von 70 µm aufweisen.
12. (Bevorzugte Ausgestaltung) Flächiger Verbundkörper nach einer der Klauseln 1 bis 11, wobei die metallischen Flächenabschnitte (i) aus einem Metall, z.B. ein von der Gruppe bestehend aus Ni, Cr, Al, Ag, Cu und einer Legierung zweier oder mehrerer der vorstehend genannten Elemente gewähltes Metall, bestehen oder (ii) aus einem Halbmetall bestehen oder (iii) aus einem metallischen Hartstoff, z.B. Titannitrid (TiN), bestehen oder (iv) aus einem Dünnschichtaufbau mit verschiedenen (halb)metallischen Schichten bestehen.
13. (Bevorzugte Ausgestaltung) Flächiger Verbundkörper nach einer der Klauseln 1 bis 12, wobei die metallischen Flächenabschnitte eine Schichtdicke aufweisen, die höchstens 50% des kleinsten Höhenunterschieds zweier benachbarter Plateaus ausmacht, bevorzugt höchstens 20% des kleinsten Höhenunterschieds zweier benachbarter Plateaus ausmacht und insbesondere bevorzugt höchstens 10% des kleinsten Höhenunterschieds zweier benachbarter Plateaus ausmacht.
14. (Bevorzugte Ausgestaltung) Flächiger Verbundkörper nach einer der Klauseln 1 bis 13, wobei der Verbundkörper an seiner Oberfläche mit einer Schutzschicht versehen ist, vorzugsweise einer Schutzfolie oder einem Schutzlack, insbesondere einem Acrylat-basierenden Schutzlack.
15. (Bevorzugte Ausgestaltung) Flächiger Verbundkörper nach einer der Klauseln 2 bis 14, wobei die Prägelackschicht auf einem thermoplastischen Lack oder einem UV-Lack basiert.
16. (Zweiter Aspekt der Erfindung) Dekorfolie, umfassend ein Foliensubstrat mit einem darauf angeordneten flächigen Verbundkörper nach einer der Klauseln 1 bis 15.
17. (Bevorzugte Ausgestaltung) Dekorfolie nach Klausel 16, wobei das Foliensubstrat auf einem Material basiert, das von der Gruppe bestehend aus PET, PVC, PC, PE, PP und PMMA gewählt ist.
18. (Dritter Aspekt der Erfindung) Verfahren zum Herstellen eines flächigen Verbundkörpers nach einer der Klauseln 1 bis 15, umfassend
   - den Schritt des Bereitstellens eines Foliensubstrats;
   - den Schritt des Ausbildens einer Reliefstruktur;
   - den Schritt des Erzeugens einer Metallisierung oberhalb der Reliefstruktur, um auf diese Weise metallische Flächenabschnitte auszubilden.
19. (Bevorzugte Ausgestaltung) Verfahren nach Klausel 18, umfassend
   - den Schritt des Bereitstellens eines Foliensubstrats;
   - den Schritt des Aufbringens einer Prägelackschicht auf das Foliensubstrat;
   - den Schritt des Prägens der Prägelackschicht, um auf diese Weise eine in die Prägelackschicht eingeprägte Reliefstruktur zu erzeugen;
   - den Schritt des Erzeugens einer Metallisierung oberhalb der in die Prägelackschicht eingeprägten Reliefstruktur, um auf diese Weise metallische Flächenabschnitte auszubilden.
20. (Bevorzugte Ausgestaltung) Verfahren nach Klausel 18 oder 19, umfassend den zusätzlichen Schritt des Versehens des flächigen Verbundkörpers mit einer Schutzschicht.
21. (Bevorzugte Ausgestaltung) Verfahren nach Klausel 18, 19 oder 20, umfassend den zusätzlichen Schritt des Ablösens des zunächst bereitgestellten Foliensubstrats als ein temporäres Foliensubstrat vom erhaltenen flächigen Verbundkörper.

### Ausführliche Beschreibung der Erfindung

Der Erfindung liegt die Erkenntnis zugrunde, dass eine vorteilhafte, für elektromagnetische Strahlung mit einer Wellenlänge ≥ 0,8 µm im Wesentlichen transparente Fläche mit metallischem Erscheinungsbild auf Grundlage eines Verbundkörpers erhältlich ist, wobei der Verbundkörper übereinander angeordnete, metallische Raster aufweist. Jedes einzelne Raster basiert auf metallischen Mikrostrukturen als Rasterelemente in Form von metallischen Flächenabschnitten. Die Raster sind lateral, d.h. entlang des Querschnitts des Verbundkörpers, auf verschiedenen Höhenstufen versetzt angeordnet.

Der erfindungsgemäße flächige Verbundkörper weist ein metallisches Erscheinungsbild auf und ist somit für das sichtbare Licht reflektierend.

Unter Infrarotstrahlung wird hierin elektromagnetische Strahlung mit einer Wellenlänge in einem Bereich von 0,8 µm bis 1mm verstanden. Unter Terahertzstrahlung wird hierin elektromagnetische Strahlung mit einer Wellenlänge in einem Bereich von 30 µm bis 3mm verstanden. Unter Mikrowellenstrahlung wird hierin elektromagnetische Strahlung mit einer Wellenlänge in einem Bereich von 1 mm bis 1 m verstanden. Unter Radiowellenstrahlung wird hierin elektromagnetische Strahlung mit einer Wellenlänge in einem Bereich von 10 cm bis 10 km verstanden. Der für Radargeräte geeignete Bereich des elektromagnetischen Spektrums ist insbesondere der Wellenlängenbereich von 1 mm bis 10 m.

Der erfindungsgemäße flächige Verbundkörper ist für elektromagnetische Strahlung mit einer Wellenlänge ≥ 0,8 µm im Wesentlichen transparent. Mit der Formulierung "im Wesentlichen" ist gemeint, dass insbesondere in Randbereichen des elektromagnetischen Spektrums, z.B. bei sehr kurzen Wellenlängen insbesondere im Nanometerbereich und/oder bei sehr langen Wellenlängen insbesondere im Kilometerbereich, die Transparenz je nach Miniaturisierung der Metallisierungen im Verbundkörper nachlassen kann. Im Allgemeinen hängt die Transparenz für eine bestimmte Wellenlänge im Falle einer unterbrochenen Metallisierung insbesondere von der Inselgröße (bzw. der Länge der metallischen Flächenabschnitte von Ende bis Ende) ab, sodass mit abnehmender Inselgröße die Transparenz für eine bestimmte Wellenlänge steigt. Die Transparenz für einen bestimmten Wellenlängenbereich des elektromagnetischen Spektrums ist somit insbesondere durch die Inselgröße steuerbar. Der erfindungsgemäße flächige Verbundkörper ist vorzugsweise zumindest für IR-Strahlung, Terahertzstrahlung, Mikrowellen und Radiowellen transparent, weiter bevorzugt zumindest für Terahertzstrahlung, Mikrowellen und Radiowellen transparent und insbesondere bevorzugt zumindest im für Radargeräte geeigneten Bereich des elektromagnetischen Spektrums, nämlich im Wellenlängenbereich von 1 mm bis 10 m, transparent.

Die Herstellung des Verbundkörpers kann z.B. so erfolgen, dass eine Reliefstruktur mit unterschiedlich hohen Plateaus in die Fläche einer Prägelackschicht geprägt wird, wobei das Prägen so erfolgt, dass die jeweils benachbarten, d.h. angrenzenden, Plateaus nie gleich hoch sind. Der Prägelack kann insbesondere auf einem UV-härtenden Lack oder auf einem thermoplastischen Lack basieren. Anschließend erfolgt das Metallisieren der Prägelackschicht mit eingeprägter Reliefstruktur, insbesondere mittels eines Aufdampfverfahrens wie etwa PVD oder CVD. Insbesondere im Zuge einer gerichteten Bedampfung werden die Flanken des Prägelacks nicht, oder lediglich unvollständig, metallisiert. Da die unterschiedlich hohen Plateaus elektrisch nicht miteinander verbunden sind, wird die Induzierung von Ringströmen bei der Transmission elektromagnetischer Strahlung stark reduziert, sodass die Transmission derselben Strahlung deutlich erhöht wird.

Es wird bevorzugt, dass die in die Prägelackschicht eingeprägte Reliefstruktur Profiltiefen mit lateraler Variation aufweist, um auf diese Weise auf verschiedenen Höhenstufen vorliegende Plateaus für die oberhalb der Plateaus angeordneten metallischen Mikrostrukturen zu bilden, wobei zwei benachbarte Plateaus einen maximalen Höhenunterschied von 500 µm, bevorzugt einen maximalen Höhenunterschied von 100 µm und insbesondere bevorzugt einen maximalen Höhenunterschied von 50 µm aufweisen.

Weiterhin wird bevorzugt, dass die in die Prägelackschicht eingeprägte Reliefstruktur Profiltiefen mit lateraler Variation aufweist, um auf diese Weise auf verschiedenen Höhenstufen vorliegende Plateaus für die oberhalb der Plateaus angeordneten metallischen Mikrostrukturen zu bilden, wobei zwei benachbarte Plateaus einen minimalen Höhenunterschied von 50 nm, bevorzugt einen minimalen Höhenunterschied von 500 nm und insbesondere bevorzugt einen minimalen Höhenunterschied von 1 µm aufweisen.

Der erfindungsgemäße Verbundkörper ist insbesondere so beschaffen, dass die metallischen Mikrostruktur als metallische Flächenabschnitte vorliegen und in Form von Vielecken gebildet sind, vorzugsweise in Form von Dreiecken, Vierecken oder Sechsecken oder in Form eines Gemisches mindestens zweier der vorstehend genannten Vielecke.

Ein flächiger Verbundkörper gemäß einer besonderen Ausführungsform ist so beschaffen, dass die metallischen Flächenabschnitte auf vier verschiedenen Höhenstufen ausgebildet sind und die metallischen Flächenabschnitten in Form von Vierecken, insbesondere quadratischen Vierecken, gebildet sind. Ein flächiger Verbundkörper gemäß einer weiteren besonderen Ausführungsform ist so beschaffen, dass die metallischen Flächenabschnitte auf drei verschiedenen Höhenstufen ausgebildet sind und die metallischen Flächenabschnitten in Form von Dreiecken oder Sechsecken gebildet sind.

Es wird bevorzugt, dass die metallischen Flächenabschnitte von Ende bis Ende eine maximale Länge von 500 µm, vorzugsweise eine maximale Länge von 100 µm und insbesondere bevorzugt eine maximale Länge von 70 µm aufweisen.

Grundsätzlich kann es sich bei den einzelnen, aus metallischen Mikrostrukturen ausgebildeten Rastern sowohl um regelmäßige bzw. periodische Raster als auch um unregelmäßige bzw. aperiodische Raster handeln. Des Weiteren können die unterschiedlich hohen Plateaus innerhalb der Prägelackschicht regelmäßig oder unregelmäßig angeordnet sein, aber in jedem Fall so, dass sich die gleich hohen Plateaus nicht berühren. Im Falle dreieckiger oder sechseckiger bzw. hexagonaler Plateaus genügen drei unterschiedliche Höhenstufen, um die gesamte Fläche auszufüllen. Gemäß dem Vier-Farben-Theorem genügen für beliebige Plateaugrößen und Plateauformen in jedem Fall vier unterschiedliche Höhenstufen.

Das Prägen der Prägelackschicht erfolgt insbesondere in Form eines Hineinprägens säulenartiger Inseln in die Lackschicht. Gemäß einer bevorzugten Variante stehen die Inseln sozusagen gerade, d.h. die Seitenwände bilden mit dem den Prägelack aufweisenden Foliensubstrat einen Winkel von 90°. Der Winkel kann insbesondere bis zu 10° und vorzugsweise bis zu 5° vom Zielwert (d.h. 90°) abweichen, damit die nachfolgenden Schritte des Herstellungsverfahrens optimal ausgeführt werden können. Anders gesagt, die metallischen Mikrostrukturen der einzelnen Raster können z.B. in Form von parallel zur Grundfläche des Verbundkörpers ausgerichteten, metallischen Flächenelementen gebildet sein, oder die metallischen Mikrostrukturen der einzelnen Raster können in Form von zur Grundfläche des Verbundkörpers gekippten, metallischen Flächenelementen gebildet sein.

Es wird bevorzugt, die Prägelackschicht oberhalb eines Foliensubstrats zu erzeugen. Das Foliensubstrat kann z.B. von PET, PVC, PC, PE, PP, PMMA oder von weiteren, für elektromagnetische Strahlung mit einer Wellenlänge ≥ 0,8 µm durchlässigen Materialien gewählt werden.

Des Weiteren wird bevorzugt, die metallischen Flächenabschnitte so zu erzeugen, dass die metallischen Flächenabschnitte (i) aus einem Metall, z.B. ein von der Gruppe bestehend aus Ni, Cr, Al, Ag, Cu und einer Legierung zweier oder mehrerer der vorstehend genannten Elemente gewähltes Metall, bestehen oder (ii) aus einem Halbmetall bestehen oder (iii) aus einem metallischen Hartstoff, z.B. Titannitrid (TiN), bestehen oder (iv) aus einem Dünnschichtaufbau mit verschiedenen (halb)metallischen Schichten bestehen. Im Falle eines Dünnschichtaufbaus mit verschiedenen (halb)metallischen Schichten kann insbesondere ein farbkippender Dünnschichtaufbau mit Absorber/Dielektrikum/Reflektor-Schichtaufbau vorliegen, z.B. ein Cr/Si02/ Al-Dünnschichtaufbau. Farbkippende Dünnschichtaufbauten weisen für den Betrachter je nach Betrachtungswinkel eine unterschiedliche Farbe auf.

Für das Erzielen eines metallischen Eindrucks wird sozusagen ein Vollspiegel aufgedampft. Durch die großen Höhenunterschiede der Plateaus und die steilen Seitenwände ist die Metallisierung an den Seitenwänden unterbrochen, was zu dem gewünschten Effekt führt, dass der Verbundkörper für elektromagnetische Strahlung mit einer Wellenlänge ≥ 0,8 µm im Wesentlichen durchlässig ist. Hierfür wird bevorzugt, dass die Metallschicht nicht allzu dick ist, damit der Effekt der unterbrochenen Metallschichten noch zu beobachten ist. Es wird bevorzugt, dass die metallischen Flächenabschnitte eine Schichtdicke aufweisen, die höchstens 50% des kleinsten Höhenunterschieds zweier benachbarter Plateaus ausmacht, bevorzugt höchstens 20% des kleinsten Höhenunterschieds zweier benachbarter Plateaus ausmacht und insbesondere bevorzugt höchstens 10% des kleinsten Höhenunterschieds zweier benachbarter Plateaus ausmacht.

Infolge des gerichteten Aufdampfens sollten die Plateaus im Prägelack elektrisch nicht miteinander verbunden sein. Gegebenenfalls vorhandene dünne Metallschichten, die sich auf den steilen Flanken der Stufen ablagern, könnten bei Bedarf durch ein kurzes Eintauchen in eine ätzende Flüssigkeit entfernt werden. Dickere metallische Schichten bleiben bei diesem Prozess bestehen und sorgen für das metallische Aussehen.

Eine alternative Methode für das Vermeiden einer elektrischen Verbindung zwischen den Prägelack-Inseln ist die Anwendung leichter Unterschnitte an den Inselkanten. Dies kann zu einer Abschirmung bei der Metallisierung dienen und der elektrische Kontakt ist unterbrochen. Die Unterschnitte sind vorzugsweise nicht allzu groß, weil es sonst zu Schwierigkeiten bei der Entformung (d.h. bei dem Ablösen des Prägestempels vom geprägten Prägelack) kommen kann. Die Unterschnitte betragen vorzugsweise höchstens 10% der Inselgröße, insbesondere bevorzugt höchstens 5%.

Es wird bevorzugt, den erhaltenen Verbundkörper mittels eines Aufbringens einer transparenten Deckschicht abzudecken, die vor Umwelteinflüssen und Zerkratzen schützt. Diese Schutzschicht ist vorzugsweise nicht elektrisch leitfähig und darüber hinaus optisch transparent, um das metallische Erscheinungsbild nicht zu verändern. Es eignen sich insbesondere Acrylatbasierte Lacke. Alternativ kann der Verbundkörper auch durch die Lamination einer Schutzfolie geschützt werden.

Der erfindungsgemäße flächige Verbundkörper kann als solches auf eine gewünschte Oberfläche appliziert werden und damit als Abdeckung z.B. einer Parabolantenne, einer Radarantenne oder einer ähnlichen Einrichtung einer Detektionsvorrichtung dienen. Die Applikation kann z.B. durch Tiefziehen, Hinterspritzen oder Aufkleben auf die gewünschte Oberfläche erfolgen.

Gemäß einer Variante ist der erfindungsgemäße flächige Verbundkörper Teil einer Dekorfolie. Die Dekorfolie umfasst ein Foliensubstrat mit dem darauf angeordneten flächigen Verbundkörper. Die Dekorfolie kann z.B. mittels einer Klebschicht auf die gewünschte Oberfläche appliziert werden und damit als Abdeckung z.B. einer Parabolantenne, einer Radarantenne oder einer ähnlichen Einrichtung einer Detektionsvorrichtung dienen. Die Klebschicht kann insbesondere auf der dem Verbundkörper entgegengesetzten Seite des Foliensubstrats angeordnet sein. Alternativ kann die Klebschicht auf der dem Foliensubstrat entgegengesetzten Seite des Verbundkörpers angeordnet sein.

Gemäß einer besonderen Ausführungsform erfolgt das Herstellen einer Dekorfolie so, dass die Dekorfolie ein Foliensubstrat mit dem darauf angeordneten flächigen Verbundkörper aufweist, wobei zwischen dem Foliensubstrat und dem flächigen Verbundkörper eine geeignete Releaseschicht vorgesehen wird. Das Foliensubstrat der Dekorfolie ist in diesem Fall ein temporäres Substrat und kann bei Bedarf vom flächigen Verbundkörper abgelöst werden.

Weitere Ausführungsbeispiele sowie Vorteile der Erfindung werden nachfolgend in Verbindung mit den Figuren erläutert.

Es zeigen:
Fig. 1 den Ausschnitt einer erfindungsgemäßen Dekorfolie gemäß einem ersten Ausführungsbeispiel in Draufsicht;
Fig. 2 die erfindungsgemäße Dekorfolie der Figur 1 in Querschnittansicht entlang der Linie E-E';
Fig. 3 eine weitere erfindungsgemäße Dekorfolie gemäß einem zweiten Ausführungsbeispiel;
Fig. 4 eine weitere erfindungsgemäße Dekorfolie gemäß einem dritten Ausführungsbeispiel;
Fig. 5 ein Beispiel eines erfindungsgemäßen flächigen Verbundkörpers, der nach dem Ablösen des temporären Foliensubstrats erhalten wurde;
Fig. 6 eine weitere erfindungsgemäße Dekorfolie gemäß einem vierten Ausführungsbeispiel; und
Fig. 7 eine weitere erfindungsgemäße Dekorfolie gemäß einem fünften Ausführungsbeispiel.

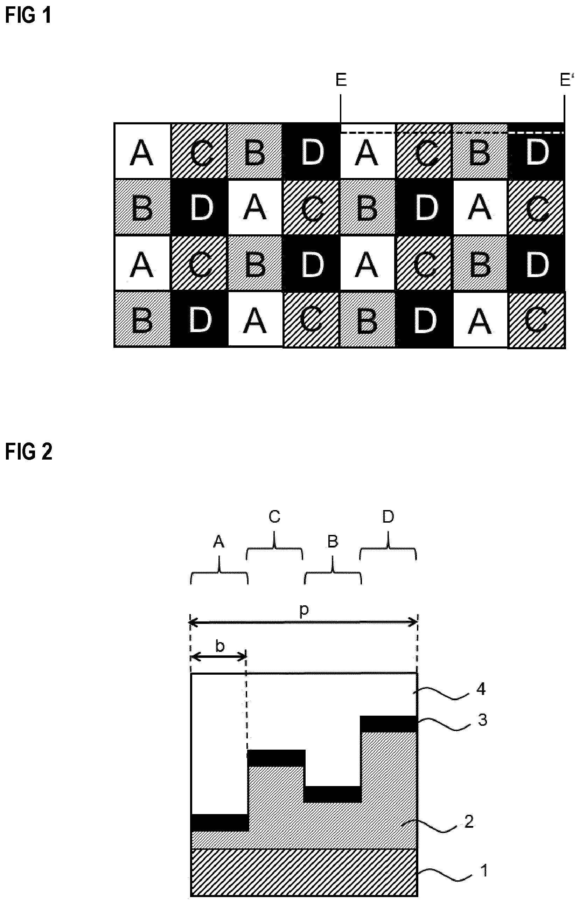

Die Figur 1 zeigt den Ausschnitt einer erfindungsgemäßen Dekorfolie gemäß einem ersten Ausführungsbeispiel in Draufsicht. Die Dekorfolie weist an ihrer Oberfläche einen flächigen Verbundkörper mit metallischem Erscheinungsbild auf und ist für elektromagnetische Strahlung mit einer Wellenlänge ≥ 0,8 µm im Wesentlichen durchlässig. Der flächige Verbundkörper enthält metallische Mikrostrukturen, nämlich metallische Flächenabschnitte, die im vorliegenden Beispiel die Form quadratischer Vierecke besitzen. Der flächige Verbundkörper weist vier Sorten metallischer Flächenabschnitte auf, die jeweils mit dem Buchstaben "A", "B", "C" bzw. "D" bezeichnet werden. Die vier Sorten metallischer Flächenabschnitte unterscheiden sich im Hinblick auf die Höhenstufe entlang des Querschnitts des flächigen Verbundkörpers, wobei die vier Buchstaben A, B, C und D jeweils die folgende Höhenstufe bezeichnen:
A: sehr geringe Höhenstufe;
B: geringe Höhenstufe;
C: hohe Höhenstufe;
D: sehr hohe Höhenstufe.

Die metallischen Flächenabschnitte mit dem Buchstaben "A" bilden ein erstes Raster, das auf einer sehr geringen Höhenstufe angeordnet ist. Die metallischen Flächenabschnitte mit dem Buchstaben "B" bilden ein zweites Raster, das auf einer geringen Höhenstufe angeordnet ist. Die metallischen Flächenabschnitte mit dem Buchstaben "C" bilden ein drittes Raster, das auf einer hohen Höhenstufe angeordnet ist. Die metallischen Flächenabschnitte mit dem Buchstaben "D" bilden ein viertes Raster, das auf einer sehr hohen Höhenstufe angeordnet ist.

Anhand der Figur 1 ist erkennbar, dass die vier verschiedenen metallischen Flächenabschnitte A, B, C und D periodisch angeordnet sind. So bilden die Flächenabschnitte an der Oberseite des flächigen Verbundkörpers die sich wiederholende Reihenfolge A-C-B-D. Der flächige Verbundkörper wird somit aus vier jeweils periodischen Rastern gebildet.

Die Figur 2 zeigt die erfindungsgemäße Dekorfolie der Figur 1 in Querschnittansicht entlang der gestrichelten Linie E-E'. Die Dekorfolie basiert auf einem Foliensubstrat 1, im Beispiel eine Polyethylenterephthalat(PET)-Folie, die für elektromagnetische Strahlung mit einer Wellenlänge ≥ 0,8 µm durchlässig ist. Oberhalb des Foliensubstrats 1 befindet sich eine Prägelackschicht 2, die im vorliegenden Fall auf Grundlage eines UV-härtenden Lacks erhalten wurde. Die Prägelackschicht 2 hat eine eingeprägte Reliefstruktur mit Profiltiefen mit lateraler Variation, wobei insgesamt vier verschiedene Plateaus mit jeweils unterschiedlicher Höhenstufe gebildet sind. Die Bezugsnummer 3 bezeichnet die oberhalb der Plateaus gebildeten Metallschichten, im vorliegenden Fall eine durch Aufdampfen erhaltene Aluminium-Metallisierung. Der flächige Verbundkörper weist somit die Prägelackschicht 2 und die Metallisierung 3 auf. Die Dekorfolie kann optional mit einem transparenten Schutzlack 4, im vorliegenden Fall ein Acrylat-Lack, eingeebnet werden. Anhand der Figur 2 ist erkennbar, dass die vier verschiedenen metallischen Flächenabschnitte A, C, B und D jeweils auf sehr geringer Höhenstufe, hoher Höhenstufe, geringer Höhenstufe bzw. sehr hoher Höhenstufe gebildet sind. Die mit dem Doppelpfeil "b" gezeigte Abmessung repräsentiert die Länge eines metallischen Flächenabschnitts von Ende bis Ende. Die mit dem Doppelpfeil "p" gezeigte Abmessung repräsentiert die Gitterperiode.

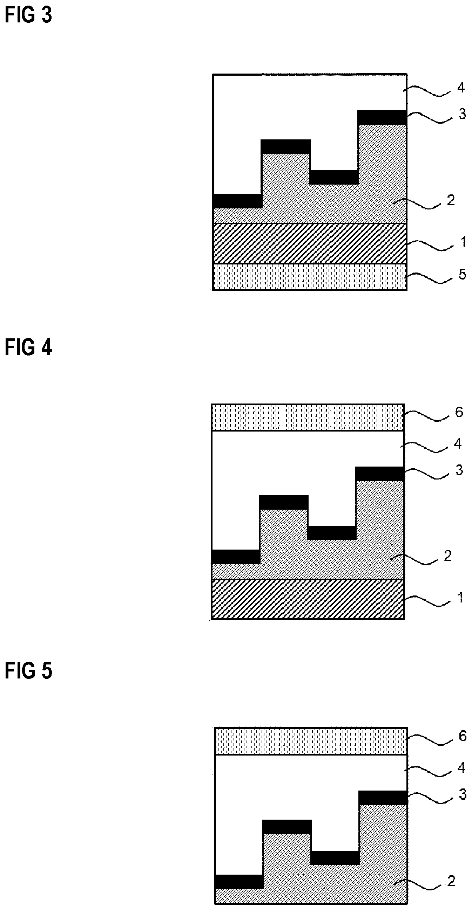

Die Figur 3 zeigt eine weitere erfindungsgemäße Dekorfolie gemäß einem zweiten Ausführungsbeispiel, das an das vorstehend beschriebene erste Ausführungsbeispiel angelehnt ist. Die Dekorfolie umfasst ein Foliensubstrat 1, eine Prägelackschicht 2, eine Metallisierung 3 und einen einebnenden Schutzlack 4. Die Dekorfolie weist zusätzlich an der Unterseite des Foliensubstrats 1 eine Klebschicht 5 auf, mit der die Dekorfolie als Abdeckung z.B. einer Parabolantenne, einer Radarantenne oder einer ähnlichen Einrichtung einer Detektionsvorrichtung verklebt werden kann.

Die Figur 4 zeigt eine weitere erfindungsgemäße Dekorfolie gemäß einem dritten Ausführungsbeispiel, das an das vorstehend beschriebene erste Ausführungsbeispiel angelehnt ist. Die Dekorfolie umfasst ein Foliensubstrat 1, eine Prägelackschicht 2, eine Metallisierung 3 und einen einebnenden Schutzlack 4. Die Dekorfolie weist zusätzlich an der Oberseite des einebnenden Schutzlacks 4 eine Klebschicht 6 auf, mit der die Dekorfolie als Abdeckung z.B. einer Parabolantenne, einer Radarantenne oder einer ähnlichen Einrichtung einer Detektionsvorrichtung verklebt werden kann.

Die Figur 5 zeigt ein Beispiel eines erfindungsgemäßen flächigen Verbundkörpers, der ein Foliensubstrat 1, eine Prägelackschicht 2, eine Metallisierung 3, einen einebnenden Schutzlack 4 und eine Klebschicht 6 für das Verkleben mit der gewünschten Oberfläche z.B. einer Radarantenne aufweist. Der in der Figur 5 gezeigte flächige Verbundkörper kann z.B. ausgehend von dem in der Figur 4 gezeigten Folienaufbau erhalten werden, wobei das Foliensubstrat 1 in diesem Fall ein temporäres, von der Prägelackschicht 2 ablösbares Foliensubstrat 1 ist, sozusagen eine Releasefolie. Das Abtrennen des Foliensubstrats 1 von der Prägelackschicht 2 kann gegebenenfalls durch das Anordnen einer Releaseschicht zwischen der Prägelackschicht 2 und dem Foliensubstrat 1 verbessert werden.

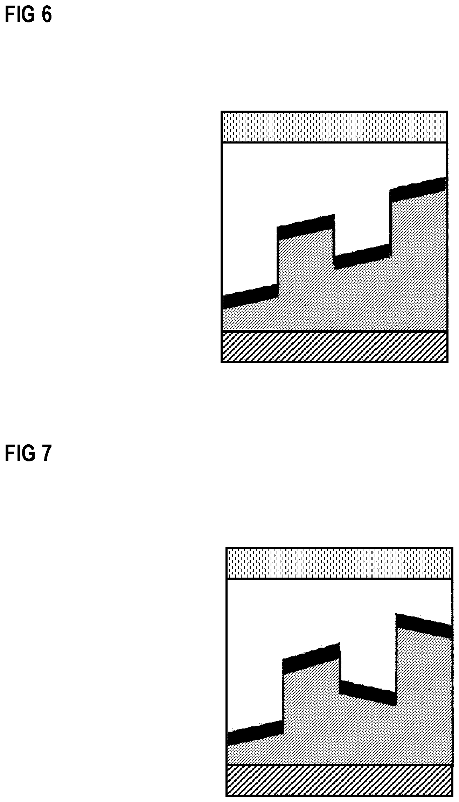

Die Figur 6 zeigt eine weitere erfindungsgemäße Dekorfolie gemäß einem vierten Ausführungsbeispiel, das an die vorangehenden Ausführungsbeispiele angelehnt ist. Im vorliegenden Fall sind die metallischen Mikrostrukturen der einzelnen Raster allerdings nicht in Form von parallel zur Grundfläche des Verbundkörpers ausgerichteten metallischen Flächenelementen gebildet, sondern die metallischen Mikrostrukturen der einzelnen Raster liegen jeweils in Form von zur Grundfläche des Verbundkörpers gekippten metallischen Flächenelementen vor.

Die Figur 7 zeigt eine weitere erfindungsgemäße Dekorfolie gemäß einem fünften Ausführungsbeispiel, das an die vorangehenden Ausführungsbeispiele angelehnt ist. Ähnlich wie im Fall der Figur 6 liegen auch im Fall der Figur 7 die metallischen Mikrostrukturen der einzelnen Raster jeweils in Form von zur Grundfläche des Verbundkörpers gekippten metallischen Flächenelementen vor. Allerdings liegen die metallischen Flächenelemente nicht mehr einheitlich in dieselbe Richtung gekippt, sondern uneinheitlich in verschiedene Richtungen gekippt vor. Auch ist die Winkelsteigung nicht mehr einheitlich, sondern unterschiedlich.

## Patentansprüche

1. Flächiger Verbundkörper mit einem metallischen Erscheinungsbild, der für elektromagnetische Strahlung mit einer Wellenlänge ≥ 0,8 µm im Wesentlichen transparent ist, umfassend eine Mehrzahl eines entlang der Grundfläche des Verbundkörpers orientierten, aus metallischen Mikrostrukturen als Rasterelemente ausgebildeten Rasters, wobei die Raster lateral, d.h. entlang des Querschnitts des Verbundkörpers, auf verschiedenen Höhenstufen versetzt angeordnet sind, wobei jedes einzelne Raster die metallischen Mikrostrukturen in Form von metallischen Flächenabschnitten aufweist.

2. Flächiger Verbundkörper nach Anspruch 1, wobei die metallischen Mikrostrukturen der einzelnen Raster jeweils in Form von parallel zur Grundfläche des Verbundkörpers ausgerichteten metallischen Flächenelementen gebildet sind, oder die metallischen Mikrostrukturen der einzelnen Raster jeweils in Form von zur Grundfläche des Verbundkörpers gekippten metallischen Flächenelementen gebildet sind.

3. Flächiger Verbundkörper nach Anspruch 1 oder 2, wobei die einzelnen Raster jeweils in Form eines periodischen oder in Form eines aperiodischen Rasters vorliegen.

4. Flächiger Verbundkörper nach einem der Ansprüche 1 bis 3, wobei die metallischen Mikrostrukturen der einzelnen Raster oberhalb einer Prägelackschicht mit einer darin eingeprägten Reliefstruktur angeordnet sind.

5. Flächiger Verbundkörper nach Anspruch 4, wobei die in die Prägelackschicht eingeprägte Reliefstruktur Profiltiefen mit lateraler Variation aufweist, um auf diese Weise auf verschiedenen Höhenstufen vorliegende Plateaus für die oberhalb der Plateaus angeordneten metallischen Mikrostrukturen zu bilden, wobei zwei benachbarte Plateaus einen maximalen Höhenunterschied von 500 µm, bevorzugt einen maximalen Höhenunterschied 100 µm und insbesondere bevorzugt einen maximalen Höhenunterschied 50 µm aufweisen.

6. Flächiger Verbundkörper nach Anspruch 4 oder 5, wobei die in die Prägelackschicht eingeprägte Reliefstruktur Profiltiefen mit lateraler Variation aufweist, um auf diese Weise auf verschiedenen Höhenstufen vorliegende Plateaus für die oberhalb der Plateaus angeordneten metallischen Mikrostrukturen zu bilden, wobei zwei benachbarte Plateaus einen minimalen Höhenunterschied von 50 nm, bevorzugt einen minimalen Höhenunterschied von 500 nm und insbesondere bevorzugt einen minimalen Höhenunterschied von 1 µm aufweisen.

7. Flächiger Verbundkörper nach einem der Ansprüche 1 bis 6, wobei die metallischen Flächenabschnitte in Form von Vielecken gebildet sind, vorzugsweise in Form von Dreiecken, Vierecken, insbesondere quadratischen Vierecken, oder Sechsecken oder in Form eines Gemisches mindestens zweier der vorstehend genannten Vielecke.

8. Flächiger Verbundkörper nach einem der Ansprüche 1 bis 7, wobei die metallischen Flächenabschnitte auf n verschiedenen Höhenstufen ausgebildet sind, d.h. die Mehrzahl Raster den Wert n annimmt, wobei der Wert n eine ganze Zahl ≥ 3, vorzugsweise die ganze Zahl 3 oder 4, annimmt.

9. Flächiger Verbundkörper nach einem der Ansprüche 1 bis 8, wobei die metallischen Flächenabschnitte auf vier verschiedenen Höhenstufen ausgebildet sind und die metallischen Flächenabschnitten vorzugsweise in Form von Vierecken, insbesondere bevorzugt in Form von quadratischen Vierecken, gebildet sind.

10. Flächiger Verbundkörper nach einem der Ansprüche 1 bis 8, wobei die metallischen Flächenabschnitte auf drei verschiedenen Höhenstufen ausgebildet sind und die metallischen Flächenabschnitte vorzugsweise in Form von Dreiecken oder Sechsecken gebildet sind.

11. Flächiger Verbundkörper nach einem der Ansprüche 1 bis 10, wobei die metallischen Flächenabschnitte von Ende bis Ende eine maximale Länge von 500 µm, vorzugsweise eine maximale Länge von 100 µm und insbesondere bevorzugt eine maximale Länge von 70 µm aufweisen.

12. Flächiger Verbundkörper nach einem der Ansprüche 1 bis 11, wobei die metallischen Flächenabschnitte (i) aus einem Metall, z.B. ein von der Gruppe bestehend aus Ni, Cr, Al, Ag, Cu und einer Legierung zweier oder mehrerer der vorstehend genannten Elemente gewähltes Metall, bestehen oder (ii) aus einem Halbmetall bestehen oder (iii) aus einem metallischen Hartstoff, z.B. Titannitrid (TiN), bestehen oder (iv) aus einem Dünnschichtaufbau mit verschiedenen (halb)metallischen Schichten bestehen.

13. Flächiger Verbundkörper nach einem der Ansprüche 1 bis 12, wobei die metallischen Flächenabschnitte eine Schichtdicke aufweisen, die höchstens 50% des kleinsten Höhenunterschieds zweier benachbarter Plateaus ausmacht, bevorzugt höchstens 20% des kleinsten Höhenunterschieds zweier benachbarter Plateaus ausmacht und insbesondere bevorzugt höchstens 10% des kleinsten Höhenunterschieds zweier benachbarter Plateaus ausmacht.

14. Flächiger Verbundkörper nach einem der Ansprüche 1 bis 13, wobei der Verbundkörper an seiner Oberfläche mit einer Schutzschicht versehen ist, vorzugsweise einer Schutzfolie oder einem Schutzlack, insbesondere einem Acrylat-basierenden Schutzlack.

15. Flächiger Verbundkörper nach einem der Ansprüche 2 bis 14, wobei die Prägelackschicht auf einem thermoplastischen Lack oder einem UV-Lack basiert.

16. Dekorfolie, umfassend ein Foliensubstrat mit einem darauf angeordneten flächigen Verbundkörper nach einem der Ansprüche 1 bis 15.

17. Dekorfolie nach Anspruch 16, wobei das Foliensubstrat auf einem Material basiert, das von der Gruppe bestehend aus PET, PVC, PC, PE, PP und PMMA gewählt ist.

18. Verfahren zum Herstellen eines flächigen Verbundkörpers nach einem der Ansprüche 1 bis 15, umfassend
- den Schritt des Bereitstellens eines Foliensubstrats;
- den Schritt des Ausbildens einer Reliefstruktur;
- den Schritt des Erzeugens einer Metallisierung oberhalb der Reliefstruktur, um auf diese Weise metallische Flächenabschnitte auszubilden.

19. Verfahren nach Anspruch 18, umfassend
- den Schritt des Bereitstellens eines Foliensubstrats;
- den Schritt des Aufbringens einer Prägelackschicht auf das Foliensubstrat;
- den Schritt des Prägens der Prägelackschicht, um auf diese Weise eine in die Prägelackschicht eingeprägte Reliefstruktur zu erzeugen;
- den Schritt des Erzeugens einer Metallisierung oberhalb der in die Prägelackschicht eingeprägten Reliefstruktur, um auf diese Weise metallische Flächenabschnitte auszubilden.

20. Verfahren nach Anspruch 18 oder 19, umfassend den zusätzlichen Schritt des Versehens des flächigen Verbundkörpers mit einer Schutzschicht.

21. Verfahren nach Anspruch 18, 19 oder 20, umfassend den zusätzlichen Schritt des Ablösens des zunächst bereitgestellten Foliensubstrats als ein temporäres Foliensubstrat vom erhaltenen flächigen Verbundkörper.
